# EUROPEAN PATENT APPLICATION

(11) **EP 1 580 743 A1**
(43) Date of publication of application: **28.09.2005**
(21) Application number: 03775831.5
(22) Date of filing: 19.11.2003
(51) Int. Cl.: G11B 19/00, G11B 20/10, H04N 5/85

(54) **DISK DEVICE, METHOD FOR CONTROLLING DISK DEVICE, AND PROGRAM FOR DISK DEVICE CONTROLLING METHOD**

(30) Priority: 25.12.2002 JP 2002373497
(71) Applicant: SONY CORPORATION, Tokyo 141-0001 (JP)
(72) Inventor: MATSUNO, Katsumi, c/o SONY CORPORATION, Tokyo 141-0001 (JP); ARIDOME, Kenichiro, c/o SONY CORPORATION, Tokyo 141-0001 (JP); MAEDA, Yasuaki, c/o SONY CORPORATION, Tokyo 141-0001 (JP)
(74) Representative: Mills, Julia
(86) International application number: PCT/JP2003/014700
(87) International publication number: WO 2004/059638

(57) **Abstract**

This invention relates illustratively to a portable video recorder that uses an optical disk. The inventive recorder is arranged to switch the degree of power conservation depending on the length of an idle time T2 during intermittent recording and/or reproduction of continuous data to and/or from the optical disk.

## Description

### TECHNICAL FIELD

The present invention relates generally to a disk drive, a disk drive controlling method, and a disk drive controlling method program. More particularly, the invention relates to a portable video recorder that uses an optical disk and by extension to techniques for switching the degree of power conservation in keeping with the length of an idle time during the intermittent recording or reproduction of continuous data, whereby power dissipation is reduced more efficiently than before.

### BACKGROUND ART

Conventional camcorders were designed to record video data representing pictures taken of desired subjects onto a recording medium in the form of a magnetic tape. Camcorders of this type were arranged to switch their overall operation into standby mode if they were inactive for an extended period of time. The mode switching feature was intended to reduce the dissipation of the battery-based power supply.

In recent years, various recording apparatuses utilizing a disk-type recording medium such as an optical disk instead of the magnetic tape have been proposed. Image pickup devices of this type using the disk recording medium are also designed to switch their overall operation into standby mode to reduce battery power dissipation, as disclosed in the Japanese Patent Laid-open No. Hei 9-219806.

It has long been recognized that if such equipment using the disk-like recording medium might save power more efficiently, the available time of the equipment operating on batteries would be made much longer. That in turn would provide users with more convenience.

### DISCLOSURE OF INVENTION

The present invention has been made in view of the above circumstances and provides a disk drive, a disk drive controlling method, and a disk drive controlling method program for reducing the dissipation of power more efficiently than before.

In carrying out the invention and according to one aspect thereof, there is provided a disk drive for intermittently recording and/or reproducing a continuous data stream to and/or from a disk-type recording medium in increments of a predetermined amount of data; wherein parts of driving circuits for driving the disk-type recording medium are temporarily deactivated while the data stream is not being recorded to the disk-type recording medium in an idle time during the intermittent recording and/or reproduction of the data stream; and wherein the driving circuit parts to be deactivated are switched depending on the length of the idle time.

The disk drive of the invention, as outlined above, records and/or reproduces the continuous data stream intermittently to and/or from the disk-type recording medium in increments of the predetermined amount of data. Parts of the driving circuits for driving the disk-type recording medium are turned off temporarily while the data stream is not being written to the disk-type recording medium in each idle time during the intermittent recording and/or reproduction of the data stream. The driving circuit parts to be deactivated are switched depending on the length of the idle time. Illustratively, the recording or reproduction of streaming data at a low data transfer rate may entail a relatively long idle time during the operation. In that case, many of the circuits in use may be deactivated in each idle time during the recording or reproduction, whereby power is saved significantly. On the other hand, if the idle time is relatively short, the circuits to be turned off in each idle time during the operation are limited so as not to affect the repeated steps of the recording or reproduction. In this manner, power supply is controlled more scrupulously so that power dissipation is reduced more efficiently than before.

According to another aspect of the invention, there is provided a disk drive controlling method for controlling a disk drive for intermittently recording and/or reproducing a continuous data stream to and/or from a disk-type recording medium in increments of a predetermined amount of data, the disk drive controlling method comprising the steps of: temporarily deactivating parts of driving circuits for driving the disk-type recording medium while the data stream is not being recorded to the disk-type recording medium in an idle time during the intermittent recording and/or reproduction of the data stream; and switching the driving circuit parts to be deactivated depending on the length of the idle time.

Where the disk drive controlling method above according to the invention is used in conjunction with the disk drive, power dissipation of the disk drive is also reduced more efficiently than before.

According to a further aspect of the invention, there is provided a disk drive controlling method program for use with a computer controlling a disk drive for intermittently recording and/or reproducing a continuous data stream to and/or from a disk-type recording medium in increments of a predetermined amount of data, the disk drive controlling method program causing the computer to carry out a procedure comprising the steps of: temporarily deactivating parts of driving circuits for driving the disk-type recording medium while the data stream is not being recorded to the disk-type recording medium in an idle time during the intermittent recording and/or reproduction of the data stream; and switching the driving circuit parts to be deactivated depending on the length of the idle time.

Where the disk drive controlling method program above according to the invention is used in conjunction with the computer for controlling the disk drive, power dissipation of the disk drive is also reduced more efficiently than before.

### BRIEF DESCRIPTION OF DRAWINGS

Fig. 1 is a block diagram showing a recording apparatus according to this invention;
Fig. 2 is a block diagram indicating data flows during data recording performed by the recording apparatus of Fig. 1;
Fig. 3 is a block diagram depicting data flows during data reproduction performed by the recording apparatus of Fig. 1;
Fig. 4 is a block diagram explaining data transfer rates applicable to the recording apparatus of Fig. 1;
Figs. 5A through 5E are timing charts in effect when data recording is performed by the recording apparatus of Fig. 1 in high quality picture mode;
Fig. 6A through 6E are timing charts in effect when data recording is performed by the recording apparatus of Fig. 1 in low quality picture mode;
Figs. 7A through 7E are timing charts in effect when data reproduction is performed by the recording apparatus of Fig. 1 in high quality picture mode;
Figs. 8A through 8E are timing charts in effect when data reproduction is performed by the recording apparatus of Fig. 1 in low quality picture mode;
Figs. 9A through 9E are other timing charts in effect when data recording is performed by the recording apparatus of Fig. 1 in high quality picture mode;
Figs. 10A through 10E are other timing charts in effect when data recording is performed by the recording apparatus of Fig. 1 in low quality picture mode;
Figs. 11A through 11E are other timing charts in effect when data reproduction is performed by the recording apparatus of Fig. 1 in high quality picture mode; and
Figs. 12A through 12E are other timing charts in effect when data reproduction is performed by the recording apparatus of Fig. 1 in low quality picture mode.

### BEST MODE FOR CARRYING OUT THE INVENTION

One preferred embodiment of this invention will now be described in detail with reference to the accompanying drawings.

### (1) Structure of the preferred embodiment

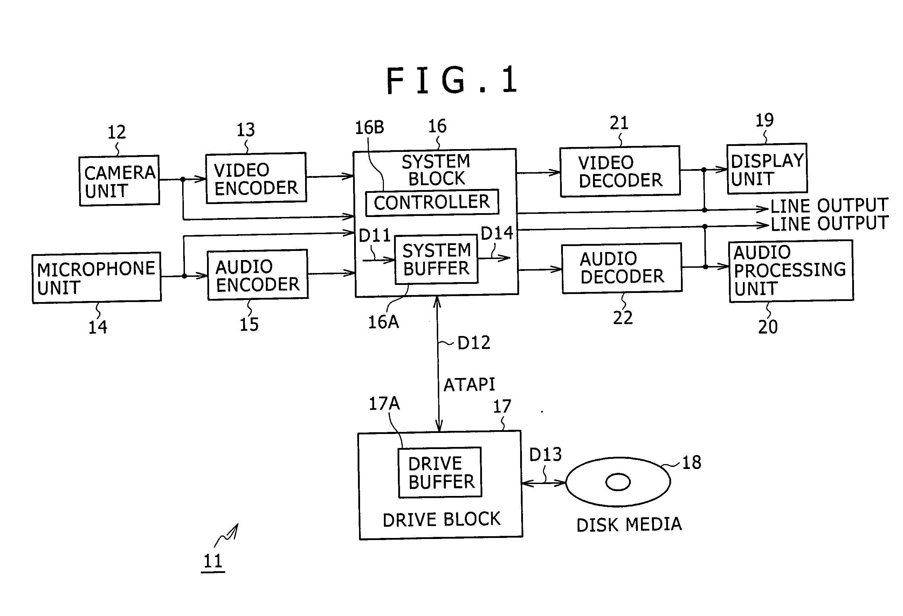

Fig. 1 is a block diagram showing a recording apparatus embodying this invention. The recording apparatus is a portable camcorder that adopts the recording/reproducing system of an optical disk drive replacing the magnetic tape-based recording/reproducing system of conventional camcorders.

In the recording apparatus 11, a camera unit 12 takes pictures of a desired subject through a lens arrangement and outputs video data representative of the pictures taken. A video encoder 13 receiving the video data from the camera unit 12 compresses the received data illustratively in MPEG format for output. More specifically, the video encoder 13 compresses the video data at a so-called constant bit rate that keeps the amount of generated data constant and switches the amount of generated data under control of a system block 16. This feature allows the recording apparatus 11 to record captured pictures in either high quality picture mode or low quality picture mode. A microphone unit 14 with its microphones acquires an audio signal, amplifies the acquired signal, and outputs the amplified audio signal in digital form. An audio encoder 15 compresses the received audio signal in digital form for output.

In recording the pictures taken, the system block 16 subjects to time division multiplexing the video and audio data coming from the video encoder 13 and audio encoder 15. During the time division multiplexing process, the system block 16 generates streaming data at 10 Mbps and 5 Mbps in high quality picture mode and low quality picture mode, respectively, and outputs the generated streaming data to a drive block 17 via a system buffer 16A. In reproducing recorded pictures, the system block 16 admits reproduced data from the drive block 17 via the system buffer 16A in the opposite direction of recording. The reproduced data thus received is split into video and audio data for output to a video decoder 21 and an audio decoder 22, respectively.

When simply monitoring what has been picked up, the system block 16 outputs the audio data coming from the camera unit 12 and the audio data from the microphone unit 14 to a display unit 19, an audio processing unit 20, and line output terminals. During the monitoring process, the system block 16 causes a controller 16B to output various commands to the drive block 17 and other circuits in response to the user's operations and thereby controls the overall apparatus operation. The controller 16B is a built-in computer that controls the recording apparatus 11 in operation. As such, the controller 16B outputs diverse commands, to be described later, by carrying out previously installed programs.

Upon reproduction, the video decoder 21 decompresses the video data coming from the system block 16 and outputs the decompressed data to the display unit 19 and line output terminals. The audio decoder 22, upon reproduction, decompresses the audio data coming from the system block 16 and forwards the decompressed data to the audio processing unit 20 and line output terminals.

When monitoring the pictures taken, the display unit 19 drives a liquid crystal display panel based on the video data coming from the system block 16. The display panel thus driven displays the pictures for monitoring purposes. At the time of reproduction, the display unit 19 drives the liquid crystal display panel based on the video data coming from the video decoder 21 in order to display reproduced pictures. When monitoring what has been recorded, the audio processing unit 20 drives speakers or the like based on the audio data coming from the system block 16 so as to output an audio signal representative of the audio data for monitoring purposes. Upon reproduction, the audio processing unit 20 drives the speakers or the like based on the audio data coming from the audio decoder 22 and outputs an audio signal denoting the reproduced audio data for monitoring purposes.

The drive block 17, together with an optical disk 18, constitutes an optical disk drive. Output data from the system block 16 is stored temporarily in a drive buffer 17A before being transferred and recorded to the optical disk 18. The data recorded on the optical disk 18 is reproduced by the drive block 17, and the reproduced data is transferred to the system block 16. During the process, the drive block 17 records or reproduces the data to or from the optical disk 18 at a transfer rate of 20 Mbps.

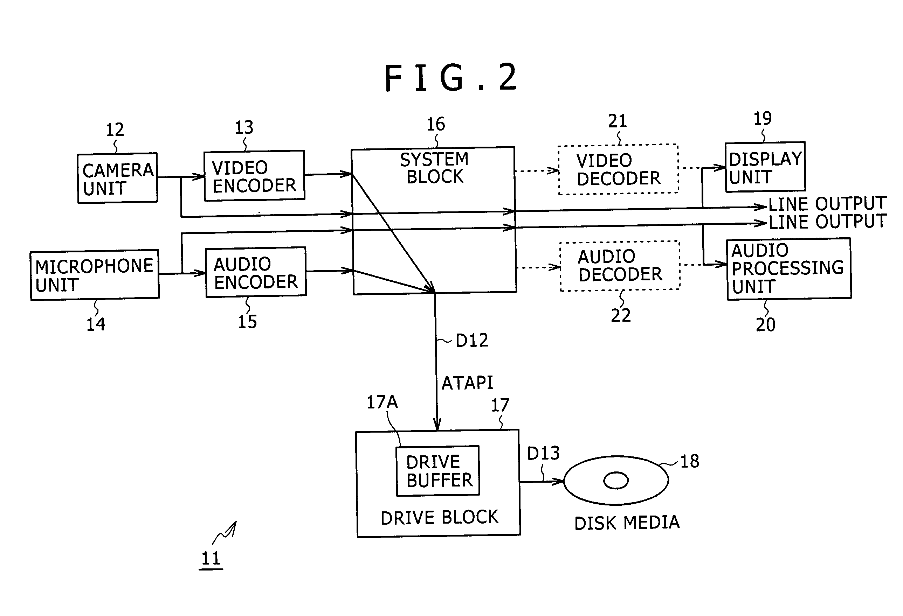

In the recording apparatus 11, as illustrated in Fig. 2, the video data and audio data coming from the camera unit 12 and microphone unit 14 are compressed by the video encoder 13 and audio encoder 15 respectively before being subjected to time division multiplexing by the system block 16. The resulting streaming data from the system block 16 is recorded to the optical disk 18. In parallel with the recording process, the video data and audio data acquired from the camera unit 12 and microphone unit 14 through the system block 16 may be fed to the display unit 19 and audio processing unit 20 as well as to the line output terminals for the monitoring of what is being recorded.

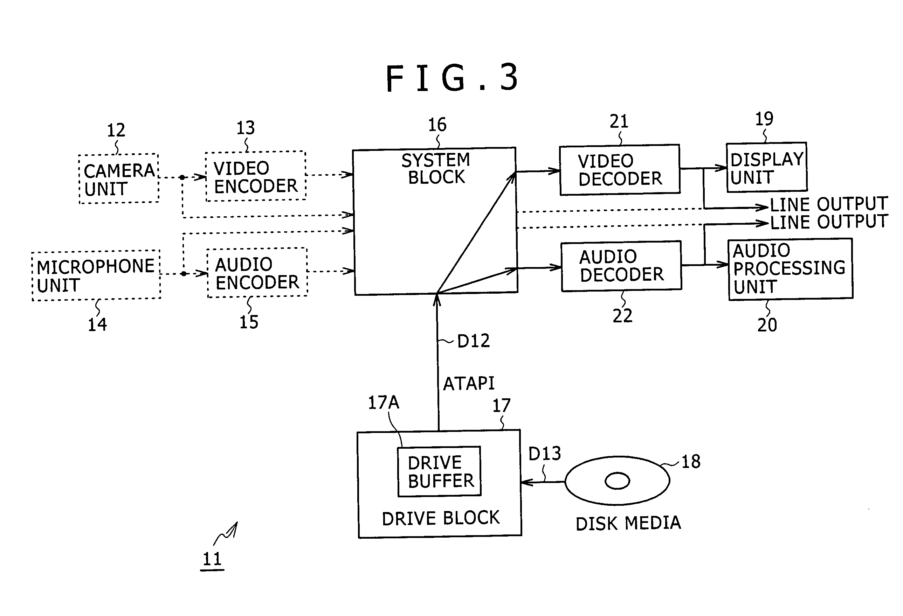

Upon reproduction, as shown in Fig. 3, the reproduced data from the optical disk 18 is forwarded from the drive block 17 to the system block 16. The system block 16 splits the received data into video data and audio data which are then decompressed by the video decoder 21 and audio decoder 22 respectively. The video data and audio data thus decompressed may be monitored by the display unit 19 and audio processing unit 20 as well as by an externally connected device.

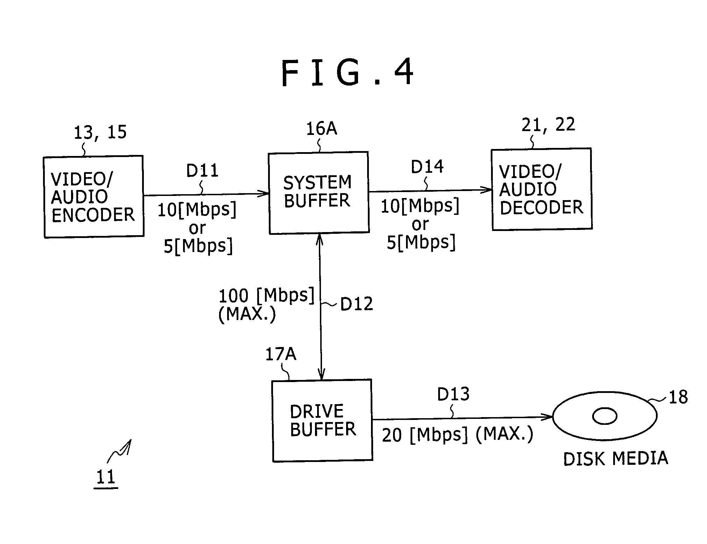

The recording apparatus 11 has the system block 16 and drive block 17 connected through ATAPI (AT Attachment Packet Interface) to implement data transmission at a data transfer rate of 100 Mbps. When the user sets high quality picture mode or low quality picture mode, the recording apparatus 11 stores input data D11 coming from the video encoder 13 and audio encoder 15 temporarily into the system buffer 16A at the rate of 10 Mbps or 5 Mbps, transfers the buffered data to the drive buffer 17A at transfer rates of up to 100 Mbps, and records the transferred data to the optical disk 18 at rates of up to 20 Mbps, as shown in Fig. 4. For data reproduction, the recording apparatus 11 reproduces data from the optical disk 18 at rates of up to 20 Mbps and transfers the reproduced data to the system buffer 16A for data output to the video decoder 21 and audio decoder 22 at the rate of 10 Mbps or 5 Mbps.

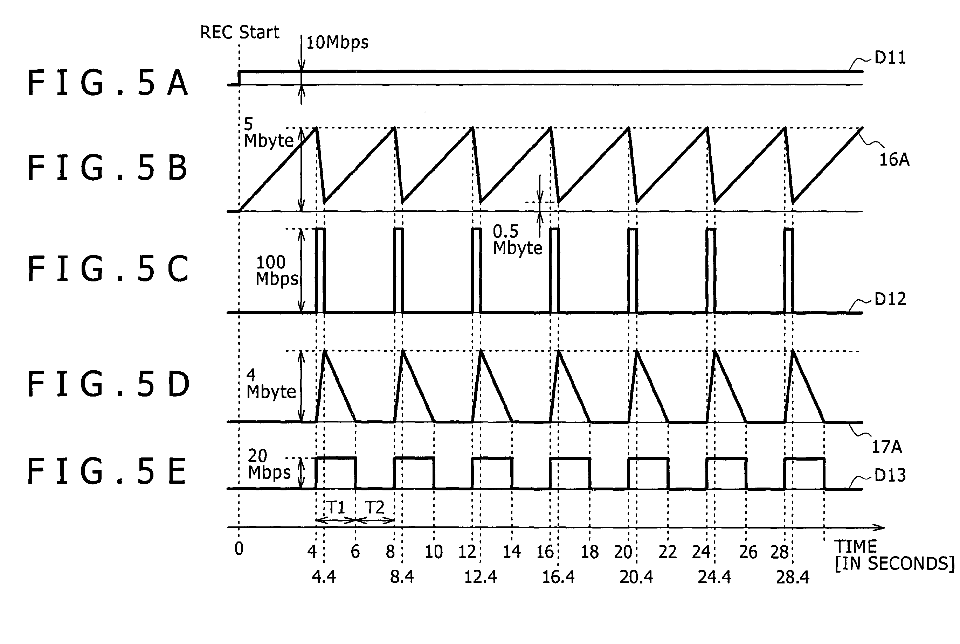

Figs. 5A through 5E are timing charts indicative of data transfers effected by the recording apparatus 11 at the above-stated data transfer rates in high quality picture mode. With this embodiment, streaming data is placed into the system buffer 16A at the rate of 10 Mbps, whereas the data is recorded to the optical disk 18 at 20 Mbps. Thus the controller 16B in the system block 16 controls the circuits involved in a manner causing the recording apparatus 11 to work as follows: except for retries that may be attempted, data D13 is recorded to the optical disk 18 intermittently so that one write time T1 in which the data is written to the optical disk 18 is matched by one idle time T2 in which no data is written to the optical disk 18, and that the amount of data written in each write time T1 is 5 megabytes.

Recording is started (REC Start) in response to a suitable operation made by the user. The system block 16 then starts storing streaming data into the system buffer 16A at 10 Mbps (Figs. 5A and 5B). When the streaming data is buffered up to the amount of 5 megabytes (Fig. 5B), the controller 16B gives the drive block 17 a write command to write the buffered data. The command causes the 5 megabytes of buffered streaming data to be transferred to the drive block 17 at 100 Mbps (Fig. 5C) . Data D12 thus transferred to the drive block 17 is recorded to the optical disk 18 via the drive buffer 17A (Figs. 5D and 5E). In this example, the write time T1 and idle time T2 are alternated at intervals of about two seconds so that the streaming data is recorded intermittently.

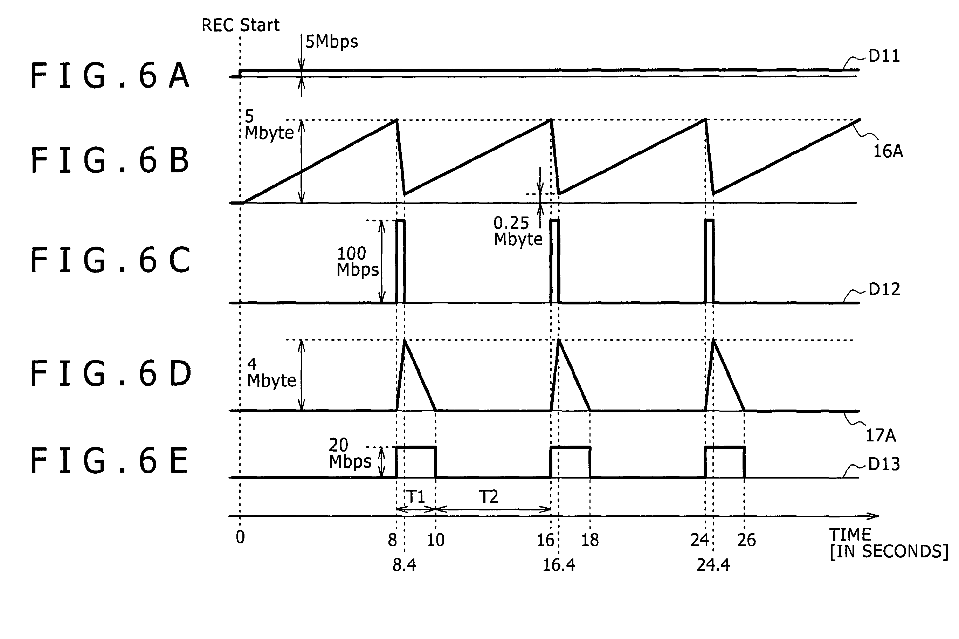

In contrast to Figs. 5A through 5E, Figs. 6A through 6E show timing charts indicative of the similar operations by the recording apparatus 11 in low quality picture mode this time. As in high quality picture mode, the controller 16B in low quality picture mode starts the recording process (REC Start) when the predetermined amount of data is stored in the system buffer 16A. More specifically, streaming data is input to the system buffer 16A at 5 Mbps (Figs. 6A and 6B). When the streaming data is buffered up to the amount of 5 megabytes, the controller 16B in the system block 16 causes the 5 megabytes of buffered streaming data to be transferred to the drive block 17 at 100 Mbps (Fig. 6C). Data D12 thus transferred to the drive block 17 is recorded to the optical disk 18 via the drive buffer 17A (Figs. 6D and 6E). In this example, a write time T1 of about two seconds and a six-second idle time T2 are alternated so that the streaming data is recorded intermittently.

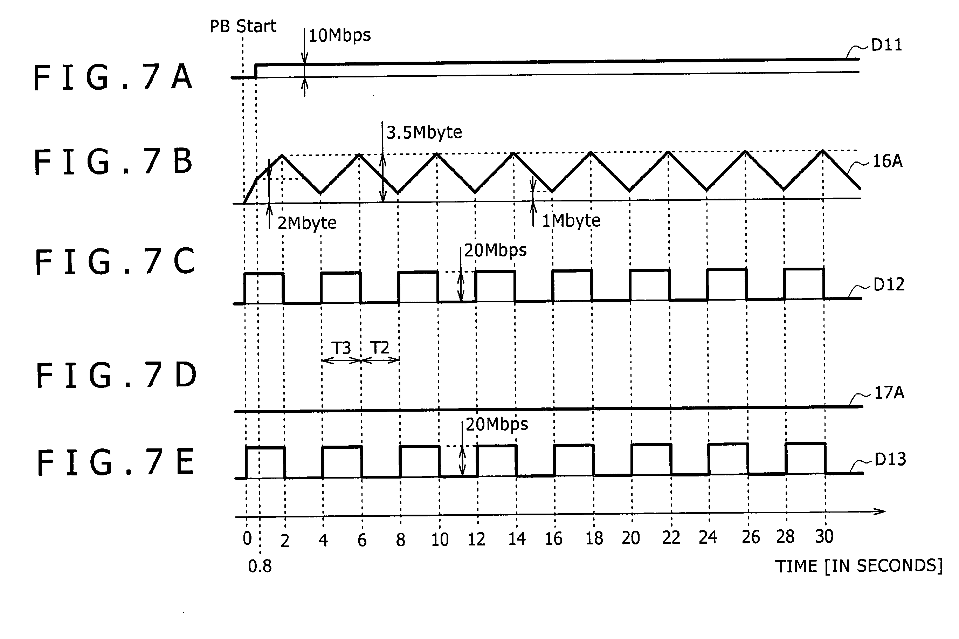

At the time of reproduction in high quality picture mode, data is reproduced intermittently in increments of a predetermined 10 megabytes of data, as shown in Figs. 7A through 7E. When reproduction (playback) is designated by the user (PB Start), the controller 16B in the system block 16 gives the drive block 17 a command to reproduce 5 megabytes of data. At about the same time that the command is issued, streaming data is reproduced from the optical disk 18 at 20 Mbps (Fig. 7E). The reproduced streaming data is sent immediately to the requesting system block 16 (Figs. 7C and 7D). In this case, the data is transferred from the drive block 17 to the system block 16 at about 20 Mbps. That is because the streaming data reproduced from the optical disk 18 at 20 Mbps is transferred in 32-kilobyte packets through ATAPI.

When the streaming data coming from the drive block 17 is accumulated in the system buffer 16A up to a predetermined amount of data (2 megabytes in the example of Figs. 7A through 7E), the recording apparatus 11 starts outputting the buffered data to the video decoder 21 and audio decoder 22 (Figs. 7A and 7B). Following the data output, with the system buffer 16A depleted to the extent that, even in the case of retries, picture freeze is sufficiently avoidable by use of the remaining buffered data (1 megabyte in the example of Figs. 7A through 7E) from the drive block 17, the controller 16B in the system block 16 gives the drive block 17 a command to reproduce another 5 megabytes of data.

In this case, read time T3 corresponding to the write time T1 and the idle time T2 are alternated also at intervals of two seconds. This permits reproduction of the data recorded on the optical disk 18.

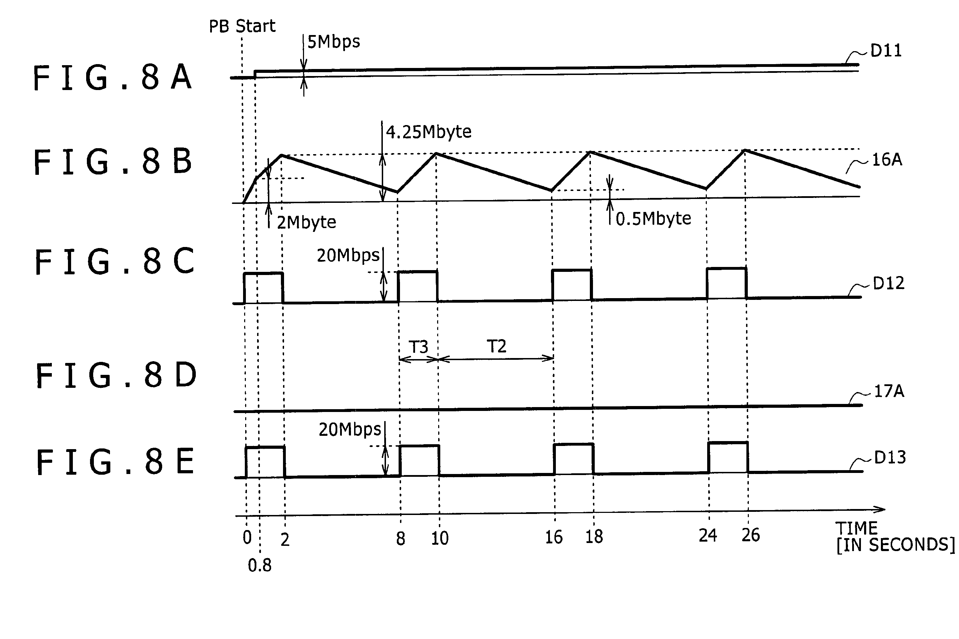

As shown in Figs. 8A through 8E in contrast to Figs. 7A through 7E, the recording apparatus 11 performs data reproduction in low quality picture mode as follows: as in high quality picture mode, the circuits involved are activated when a predetermined amount of data is accumulated in the system buffer 16A. More specifically, with data reproduction (playback) designated (PB Start), the controller 16B in the system block 16 gives the drive block 17 a command to reproduce 5 megabytes of data. At about the same time that the command is issued, streaming data D13 is reproduced from the optical disk 18 at 20 Mbps (Fig. 8E). The reproduced streaming data is transferred to the system block 16 (Figs. 8C and 8D).

In the recording apparatus 11, the streaming data coming from the drive block 17 is accumulated in the system buffer 16A up to the amount of 2 megabytes. At this point, the recording apparatus 11 starts outputting the buffered data to the video decoder 21 and audio decoder 22 (Figs. 8A and 8B). Following the data output, with the system buffer 16A depleted to the extent that, even in the case of retries, picture freeze is sufficiently avoidable by use of the remaining buffered data (0.5 megabytes in the example of Figs. 8A through 8E) from the drive block 17, the controller 16B in the system block 16 gives the drive block 17 a command to reproduce another 5 megabytes of data.

In the case above, too, the two-second read time T3 corresponding to the write time T1 and the six-second idle time T2 are alternated, whereby the data recorded on the optical disk 18 is reproduced. The write or read command is issued by the system block 16 to the drive block 17 for each packet (whose payload is 32 kilobytes) transmitted through ATAPI.

Throughout the above-described operations illustrated in Figs. 5A through 8E, the drive block 17 starts recording or reproducing data by responding instantaneously to commands issued by the controller 16B of the system block 16. The immediate response is based on the assumption that the circuits constituting the drive block 17 are always active, with the recording apparatus 11 operating illustratively on a commercial power source. If, by contrast, the recording apparatus 11 operates on batteries, then the operation of the drive block 17 is switched into power saving mode under control of the controller in the system block 16.

The drive block 17 enters power saving mode by deactivating certain circuit parts related to the optical disk 18. The circuit parts to be deactivated are switched by commands from the system block 16 so that the level of power dissipation is changed in steps.

That is, when an Idle command for saving power to a small degree is issued by the system block 16, the drive block 17 deactivates the circuits that take a relatively short time to start up. More specifically, this embodiment deactivates a spindle motor servo circuit and a magnetic head tracking control circuit using the Idle command. The drive block 17 turns off the two circuits by stopping the supply of power to them. In this case, the drive block 17 does not control spindle motor revolutions and optical pickup tracking and saves the power that would have been expended by the deactivated circuits.

When the system block 16 issues a Stop command for saving power to a large degree, the drive block 17 deactivates the circuits that take a relatively long time to start up in addition to the circuits turned off in response to the Idle command. More specifically, this embodiment additionally deactivates a spindle motor driving circuit by use of the Stop command. The drive block 17 turns off this circuit by stopping the supply of power thereto. In this case, the drive block 17 lets the optical disk 18 rotate by inertia so as to further save the power that would have been expended by the additionally deactivated circuit.

By issuing a Start command, the drive block 17 cancels the power saving mode that was set by the Stop command and switches the apparatus into the power saving mode that is put into effect by the Idle command. When a read or a write command is input through the system block 16, the power saving mode brought about by the Stop or Idle command is canceled so that normal operation mode is selected. In normal operation mode, output data from the system block 16 is recorded to the optical disk 18 in response to the write command, or reproduces data from the optical disk 18 and outputs the reproduced data to the system block 16 in response to the read command.

The controller 16B of the system block 16 determines the mode applicable to the streaming data of interest based on the user's mode settings at the time of recording, or based on information about the file to be reproduced at the time of reproduction. If the target streaming data is set to be recorded or reproduced in high quality picture mode in which the idle time T2 is relatively short and there is little time to spare, the controller 16B outputs an Idle command every time it is notified by the drive block 17 that 5 megabytes of data has been written to the disk, or whenever 5 megabytes of data has been transferred from the drive block 17. The Idle command thus output switches the drive block 17 into the power saving mode of the low power saving effect.

If the streaming data of interest is set to be recorded or reproduced in low quality picture mode in which the idle time T2 is relatively long and there is more time to spare, the controller 16B outputs a Stop command every time it is notified by the drive block 17 that 5 megabytes of data has been written to the disk, or whenever 5 megabytes of data has been transferred from the drive block 17. The Stop command thus output causes the drive block 17 to enter the power saving mode of the high power saving effect.

During data recording or reproduction in high or low quality picture mode, the user may instruct the apparatus to halt its operation. In that case, the controller 16B also outputs the Stop command.

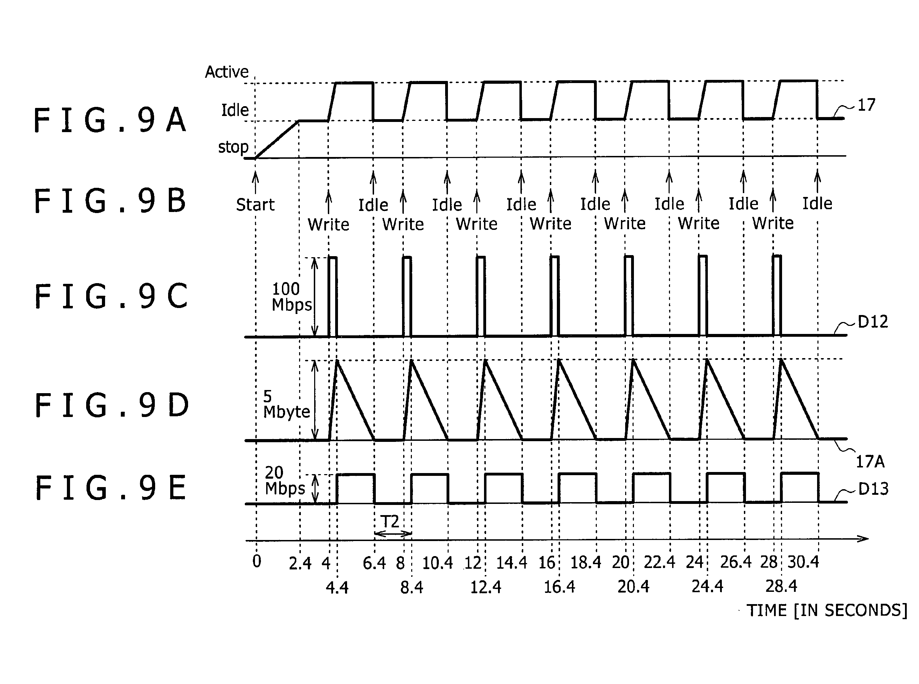

Figs. 9A through 9E, in contrast with Figs. 5A through 5E, are timing charts in effect when data recording is performed in high quality picture mode by the recording apparatus operating on batteries. In this case, when the user instructs the apparatus to start recording data, the controller 16B of the system block 16 outputs a Start command to the drive block 17 (Figs. 9A and 9B). The Start command switches the drive block 17 from the power saving mode of the Stop command into the power saving mode of the Idle command. At the same time, streaming data is arranged to start getting stored into the system buffer 16A. When 5 megabytes of streaming data has been placed in the buffer, a Write command is issued to get the 5 megabytes of buffered streaming data transferred from the system buffer 16A to the drive block 17 (Fig. 9C). At this point, the drive block 17 is switched from the power saving mode of the Idle command into normal operation mode, and the transferred data D12 is recorded to the optical disk 18 (Figs. 9D and 9E).

When recording of the 5 megabytes of data D13 is completed as described, the controller 16B issues an Idle command to the drive block 17 switching the block 17 into power saving mode. When another 5 megabytes of streaming data has been accumulated in the system buffer 16A, another Write command is issued to switch the drive block 17 from the power saving mode into normal operation mode in which the 5 megabytes of data is recorded to the disk.

It takes about 2.4 seconds to make a switch from the power saving mode of the Stop command to the power saving mode of the Idle command, and about 0.4 seconds to make a switch from the power saving mode of the Idle command to normal operation mode. Meanwhile, it takes about 4 seconds for 5 megabytes of streaming data to be accumulated in the buffer. It follows that even when the user gives a write instruction replacing the power saving mode with normal operation mode, there is no delay in writing the data captured by the camera unit 12 compared with the case where no power saving mode is set.

At the transfer rate of 100 Mbps, 5 megabytes of data is transmitted in about 0.4 seconds, and recording of the 5 megabytes of data is completed in about 4 seconds. It follows that if the apparatus is switched into power saving mode in an idle time T2 during intermittent recording, the apparatus can be started up well in time for the next write operation.

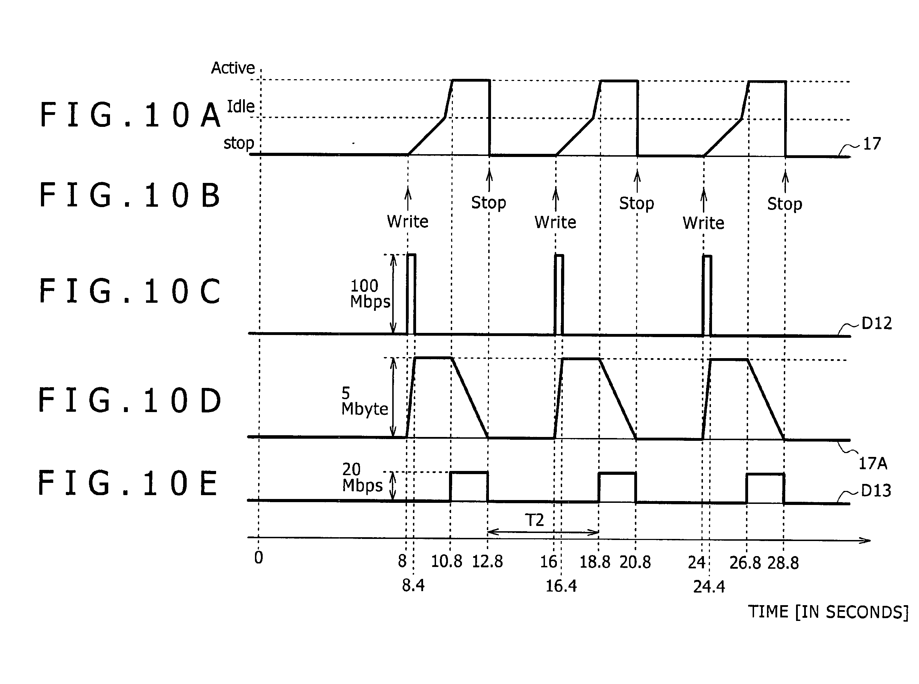

Figs. 10A through 10E, in contrast with Figs. 6A through 6E, are timing charts in effect when data recording is performed in low quality picture mode by the recording apparatus operating on batteries. In this case, when the user instructs the apparatus to start recording data, the controller 16B of the system block 16 starts accumulating streaming data into the system buffer 16A. When 5 megabytes of streaming data has been stored in the buffer, a Write command is issued to get the 5 megabytes of buffered streaming data transferred from the system buffer 16A to the drive block 17 (Figs. 10A, 10B and 10C). In turn, the controller 16B switches the drive block 17 from the power saving mode of the Stop command into normal operation mode in which the 5 megabytes of data is recorded to the optical disk 18 (Figs. 10D and 10E).

When recording of the 5 megabytes of data is completed as described, the controller 16B issues a Stop command to the drive block 17 to switch the block 17 into power saving mode. When another 5 megabytes of streaming data has been accumulated in the system buffer 16A, another Write command is issued to switch the drive block 17 from the power saving mode into normal operation mode in which the 5 megabytes of data is recorded to the disk.

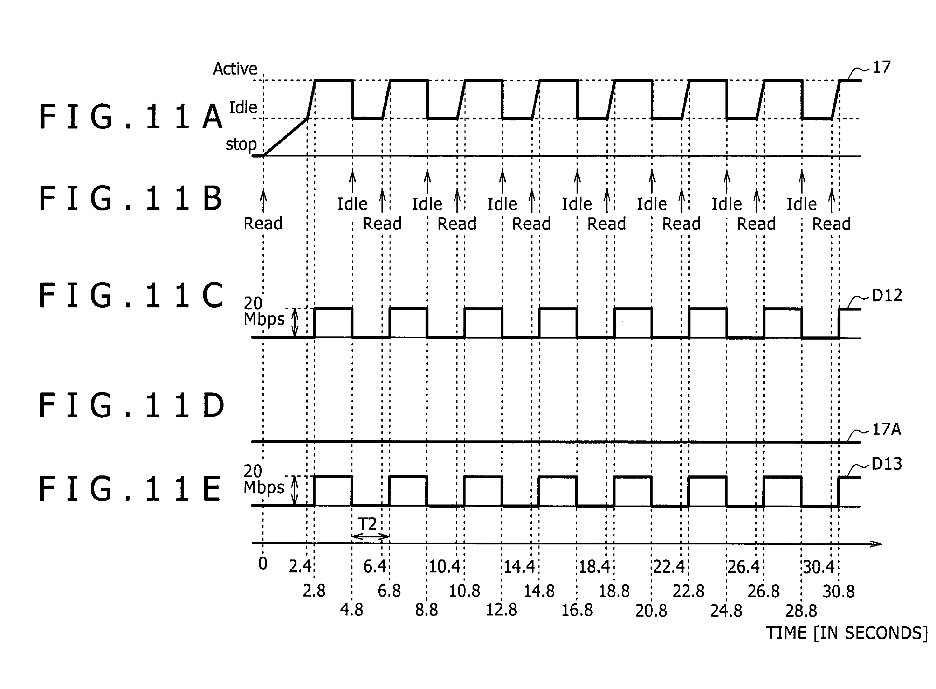

Figs. 11A through 11E, in contrast with Figs. 7A through 7E, are timing charts in effect when streaming data is reproduced in high quality picture mode by the recording apparatus operating on batteries. In this case, when the user instructs the apparatus to start reproducing data, the controller 16B of the system block 16 issues a Read command to the drive block 17. The Read command switches the drive block 17 from the power saving mode of the Stop command into normal operation mode (Figs. 11A and 11B). When the drive block 17 thus activated starts outputting reproduced data successively, the reproduced data is stored into the system buffer 16A. When a predetermined amount of data (2 megabytes) is accumulated in the buffer, the buffered data starts getting output to the video decoder 21 and audio decoder 22. When the amount of buffered data reaches 3.5 megabytes, the amount of successively reproduced data attains 5 megabytes. At this point, an Idle command is output to the drive block 17 (Figs. 11B through 11E). When the amount of data in the system buffer 16A drops below the predetermined level, another Read command is issued to the drive buffer 17A, and the steps above are repeated.

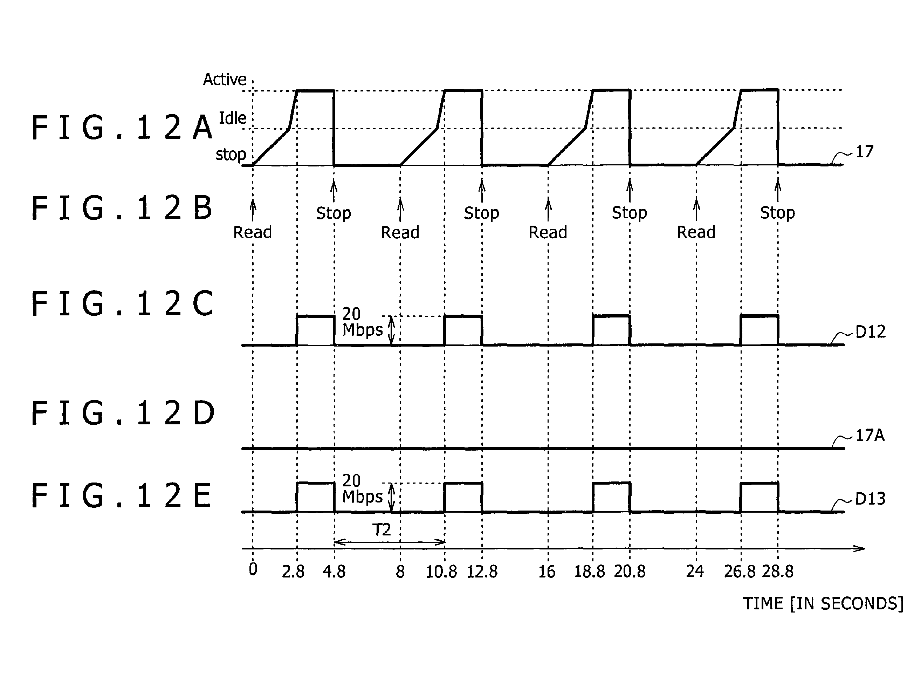

Figs. 12A through 12E, in contrast with Figs. 8A through 8E, are timing charts in effect when streaming data is reproduced in low quality picture mode by the recording apparatus operating on batteries. In this case, when the user instructs the apparatus to start reproducing data, the controller 16B of the system block 16 issues a Read command to the drive block 17. The Read command causes the drive block 17 to switch from the power saving mode of the Stop command into normal operation mode (Figs. 12A and 12B). When the drive block 17 thus activated starts outputting reproduced data successively, the reproduced data is stored into the system buffer 16A. When the predetermined amount of data (2 megabytes) is accumulated in the buffer, the buffered data starts getting output to the video decoder 21 and audio decoder 22. When the amount of buffered data reaches 3.5 megabytes, the amount of successively reproduced data attains 5 megabytes. At this point, a Stop command is output to the drive block 17 (Figs. 12B through 12E). When the amount of data in the system buffer 16A drops below the predetermined level, another Read command is issued to the drive buffer 17A, and the steps above are repeated.

### (2) Operation of the preferred embodiment

In the recording apparatus 11 of the above-described structure (Figs. 1 and 2), the camera unit 12 and microphone unit 14 acquire video and audio data about the subject being imaged. The video data and audio data thus obtained are forwarded via the system block 16 to the display unit 19 and audio processing unit 20 whereby pictures and sounds stemming from the subject are monitored.

In recording the acquired pictures and sounds to the optical disk 18, the camera unit 12 and microphone unit 14 send the corresponding video and audio data to the video encoder 13 and audio encoder 15 for data compression. The video data and audio data thus compressed are subjected to time division multiplexing by the system block 16 whereby streaming data is generated. Furthermore, the streaming data is accumulated in the system buffer 16A. When a predetermined amount of streaming data is placed into the system buffer 16A, the buffered data is transmitted to the drive block 17 through ATAPI. By way of the drive buffer 17A in the drive block 17, the buffered data is recorded to the optical disk 18 at the rate of 20 Mbps (Fig. 2).

When the user instructs the recording apparatus 11 to record data in high quality picture mode, the streaming data is generated at the transfer rate of 10 Mbps; when the user instructs the apparatus to record data in low quality picture mode, the streaming data is generated at the transfer rate of 5 Mbps. During recording to the optical disk 18, the streaming data is written intermittently in increments of a constant amount of data. Because the streaming data to be recorded intermittently in high quality picture mode or low quality picture mode is generated at the transfer rate of 10 Mbps or 5 Mbps respectively, there is more time to spare in the recording in low quality picture mode than in high quality picture mode. That is, the idle time in which no data is recorded to the optical disk 18 becomes longer in low quality picture mode than in high quality picture mode.

When operating on batteries, the recording apparatus 11 has the drive block 17 switched into power saving mode during an idle time T2 under control of the controller 16B in the system block 16, whereby overall power dissipation is reduced. In this control setup, where high quality picture mode with the relatively short idle time T2 is in effect, the Idle command issued by the system block 16 stops the supply of power to the spindle servo circuit and tracking control circuit, two circuits that take a relatively short time to start up. This saves the power that would have been expended by the deactivated circuits.

By contrast, where low quality picture mode is in effect with a relatively long time to spare, the Stop command issued by the system block 16 stops the supply of power to the spindle driving circuit that takes a relatively long time to start up in addition to the circuits deactivated by the Idle command. This provides more savings in power dissipation. The embodiment of the invention is thus arranged to switch the degree of power conservation depending on the length of the idle time during intermittent recording of consecutive data. The arrangements constitute a significantly better power saving feature than has been implemented by conventional apparatuses.

During the idle time, the power saving feature of this embodiment is controlled adaptively in keeping with variations in the bit rate of streaming data, whereby an optimal power saving effect is brought about. This contributes to prolonging the available time of the apparatus operating on batteries.

In lower quality picture mode, the recording time on the optical disk is prolonged. With this embodiment, power dissipation of batteries is reduced in low quality picture mode which is characterized by the longer recordable time. This makes it possible to improve consistency between the recordable time of the recording medium and the survival time of the batteries in use.

At the time of reproduction (Fig. 3), the data of interest is reproduced from the optical disk 18 and the reproduced data is input to the system block 16. After temporary storage in the system buffer 16A, the data is split into video data and audio data which are fed respectively to the video decoder 21 and audio decoder 22 for data decompression. The video data and audio data thus decompressed are output to the display unit 19 and audio processing unit 20.

In the series of processes above, the recording apparatus 11 reproduces data from the optical disk 18 at the rate of 20 Mbps. In high quality picture mode or low quality picture mode, the reproduced data is stored into the system buffer 16A at the rate of 10 Mbps or 5 Mbps respectively. The buffered data is output to the video decoder 21 and audio decoder 22. In this case, too, streaming data is reproduced intermittently from the optical disk 18. The idle time T2 during data reproduction is longer in low quality picture mode than in high quality picture mode.

With the recording apparatus 11 operating on batteries in data reproduction, the drive block 17 is switched into power saving mode during the idle time T2 under control of the controller 16B in the system block 16. This reduces overall power dissipation of the apparatus. In this control setup, where high quality picture mode with the relatively short idle time T2 is in effect, the Idle command issued by the system block 16 stops the supply of power to the spindle servo circuit and tracking control circuit, two of the circuits related to the optical disk which take a relatively short time to start up. Turning off these circuits saves the power that would have been expended thereby.

By contrast, where low quality picture mode is in effect with more time to spare, the Stop command issued by the system block 16 stops the supply of power to the spindle driving circuit that takes a relatively long time to start up in addition to the circuits deactivated earlier by the Idle command. This affords more savings in power dissipation. The embodiment is thus arranged to switch the degree of power conservation depending on the length of the idle time T2 during intermittent reproduction of consecutive data. The arrangements permit an appreciably enhanced power saving effect as compared with what has been achieved -or not achieved- by conventional apparatuses.

### (3) Effects of the preferred embodiment

With the above-described structure in effect, some of the driving circuits associated with the optical disk are deactivated in an idle time during intermittent recording or reproduction of consecutive data. The circuits to be deactivated are switched in keeping with the length of the idle time so that the degree of power conservation is varied correspondingly. This brings about significantly better power savings than before.

As the idle time becomes longer, more circuits are deactivated. That is, the level of power dissipation can be increased or decreased in accordance with the amount of time to spare during the idle time.

More specifically, the circuits that take a relatively long time to start up are set to be deactivated when the idle time becomes longer. In keeping with the time to spare during the idle time period, the level of power dissipation is decreased.

### (4) Other embodiments

Although the above-described embodiment was shown recording and reproducing streaming data at a constant bit rate, this is not limitative of the invention. Alternatively, the invention also applies extensively to apparatuses that record streaming data at variable bit rates (VBR). In such cases, variable idle times are predicted by monitoring the process of encoding and the amount of system buffer data during recording, or by monitoring the process of decoding and the amount of system buffer data during reproduction. With the idle time thus predicted, the Idle command and Stop command may be issued as needed for selective circuit deactivation.

In the above-described embodiment of the invention, either the Idle command or the Stop command was shown issued to switch the apparatus in idle status into power saving mode. Alternatively, the drive block may be controlled to save power by monitoring retries directly or indirectly in combination with an optimal selection of an Idle command, a Stop command, or continuous operation mode.

For the embodiment above, the degree of power conservation was shown switched approximately in two steps. Alternatively, the degree of power conservation may be switched in three or more steps.

The aforementioned embodiment was shown executing the series of control steps or processes by carrying out the previously installed programs. Alternatively, control programs for implementing the power saving mode may be downloaded via networks such as the Internet or acquired from suitable recording media including magnetic disks, optical disks, magnetic tapes, and memory cards.

The embodiment discussed above was shown recording or reproducing streaming data to or from the optical disk, one of disk-like recording media. Alternatively, desired data may be recorded or reproduced to or from other types of disk-like recording media such as magneto-optical disks and hard disks.

According to the invention, as described, the degree of power conservation is varied depending on the length of the idle time during intermittent recording or reproduction of consecutive data. The inventive scheme promises significantly better power savings than conventional power conservation setups for comparable apparatuses.

### INDUSTRIAL APPLICABILITY

This invention relates to a disk drive, a disk drive controlling method, and a disk drive controlling method program. Illustratively, the invention may be applied to portable video recorders that utilize optical disks.

## Claims

1. A disk drive for intermittently recording and/or reproducing a continuous data stream to and/or from a disk-type recording medium in increments of a predetermined amount of data;
wherein parts of driving circuits for driving said disk-type recording medium are temporarily deactivated while said data stream is not being recorded to said disk-type recording medium in an idle time during the intermittent recording and/or reproduction of said data stream; and
wherein the driving circuit parts to be deactivated are switched depending on the length of said idle time.

2. A disk drive according to claim 1, wherein more parts of said driving circuits are deactivated proportionately with said idle time getting longer.

3. A disk drive according to claim 2, wherein the driving circuit parts to be deactivated proportionately with said idle time getting longer are circuit parts taking a relatively long time to start up.

4. A disk drive controlling method for controlling a disk drive for intermittently recording and/or reproducing a continuous data stream to and/or from a disk-type recording medium in increments of a predetermined amount of data, said disk drive controlling method comprising the steps of:
temporarily deactivating parts of driving circuits for driving said disk-type recording medium while said data stream is not being recorded to said disk-type recording medium in an idle time during the intermittent recording and/or reproduction of said data stream; and
switching the driving circuit parts to be deactivated depending on the length of said idle time.

5. A disk drive controlling method program for use with a computer controlling a disk drive for intermittently recording and/or reproducing a continuous data stream to and/or from a disk-type recording medium in increments of a predetermined amount of data, said disk drive controlling method program causing said computer to carry out a procedure comprising the steps of:
temporarily deactivating parts of driving circuits for driving said disk-type recording medium while said data stream is not being recorded to said disk-type recording medium in an idle time during the intermittent recording and/or reproduction of said data stream; and
switching the driving circuit parts to be deactivated depending on the length of said idle time.
